# EUROPEAN PATENT APPLICATION

(11) **EP 4 328 839 A1**
(43) Date of publication of application: **28.02.2024**
(21) Application number: 23186752.4
(22) Date of filing: 20.07.2023
(51) Int. Cl.: G06Q 30/0238, G06Q 20/20, G06Q 20/38, G06Q 30/0207, G06Q 30/0226

(54) **POINT OF SALE SYSTEM**

(30) Priority: 25.08.2022 JP 2022134273
(71) Applicant: Toshiba TEC Kabushiki Kaisha, Tokyo 141-8562 (JP)
(72) Inventor: Fujimaki, Hidenori, Tokyo, 141-8562 (JP)
(74) Representative: Bandpay & Greuter

(57) **Abstract**

A point of sale (POS) system includes a first server that stores coupon information indicating a plurality of coupons selected by a customer for future use in association with an ID of the customer, and a POS terminal installed in a store and including: a communication interface, an input device, and a controller configured to: in response to the ID of the customer input through the input device, control the communication interface to transmit a request for the plurality of coupons associated with the ID to the first server, perform registration processing on one or more items purchased by the customer, and perform checkout processing on the registered items using the plurality of coupons.

## Description

### CROSS-REFERENCE TO RELATED APPLICATION(S)

### FIELD

Embodiments described herein relate generally to a point of sale (POS) system, a method carried out by a POS system, and a POS terminal.

### BACKGROUND

Conventionally, for the purpose of sales promotion, coupons are issued by stores and businesses (hereinafter collectively referred to as "stores") that sell items and provide services (hereinafter collectively referred to as "items"). For example, the store issues a digital coupon to a customer, such as a registered customer, who has registered a mail address, via a network.

When using the issued coupon, the customer causes a mobile terminal such as a smartphone to display a barcode identifying the coupon. The POS terminal reads the bar code displayed on the mobile terminal, discounts the coupon target item, and executes checkout processing.

A coupon issued to a customer is usually associated with a target item. For this reason, when a customer uses a plurality of coupons in a single transaction, the conventional technique requires reading of bar codes for specifying coupons a plurality of times, and it takes time for the customer to complete the transaction.

### SUMMARY OF THE INVENTION

In order to solve the above-cited problem, a point of sale (POS) system and a method according to the appended claims are provided.

Embodiments of the present invention provide a checkout device capable of efficiently performing payment processing using coupons.

A point of sale (POS) system includes a first server that stores coupon information indicating a plurality of coupons selected by a customer for future use in association with an ID of the customer, and a POS terminal installed in a store and including: a communication interface, an input device, and a controller configured to: in response to the ID of the customer input through the input device, control the communication interface to transmit a request for the plurality of coupons associated with the ID to the first server, perform registration processing on one or more items purchased by the customer, and perform checkout processing on the registered items using the plurality of coupons.

### BRIEF DESCRIPTION OF THE DRAWINGS

FIG. 1 is a schematic diagram of a coupon system according to an embodiment.
FIG. 2 is a data configuration diagram of a point management file stored in a point management server according to an embodiment.
FIG. 3 is a data configuration diagram of a coupon management file stored in the storage device of the coupon management server.
FIG. 4 is a data configuration diagram of the registered coupon file stored in the storage device of the coupon management server.
FIG. 5 is a diagram illustrating a main hardware configuration of a POS terminal according to an embodiment.
FIG. 6 is a diagram illustrating a structure of an item information unit stored in a RAM of the POS terminal.
FIG. 7 is a diagram illustrating a data configuration of a registered coupon information unit stored in a RAM of the POS terminal.
FIG. 8 is a diagram illustrating a structure of an item master stored in a storage device of the POS terminal.
FIG. 9 is a diagram illustrating a main functional configuration of a controller of the POS terminal.
FIG. 10 is a sequence chart of operations of the coupon system.
FIG. 11 is a flowchart of a checkout process performed by the controller of the POS terminal.

### DETAILED DESCRIPTION

Hereinafter, a checkout device and a program according to an embodiment will be described with reference to the drawings. The present invention is not limited to the embodiments described below. For example, in the embodiment described below, a POS terminal that performs an item registration and a checkout processing by an operation of a salesclerk is described as a checkout device, but the present invention is not limited thereto. The checkout device may be a self POS terminal that performs an item registration and a checkout processing by an operation of a customer.

The checkout device may receive item information from a registration device that performs an item registration and a checkout processing. For example, the checkout device may be a so-called two-person POS system-based checkout device. Further, the checkout device may be a checkout device of a semi-self POS including a registration device that performs item registration by an operation of a salesclerk and a checkout device that performs a checkout processing by an operation of a customer.

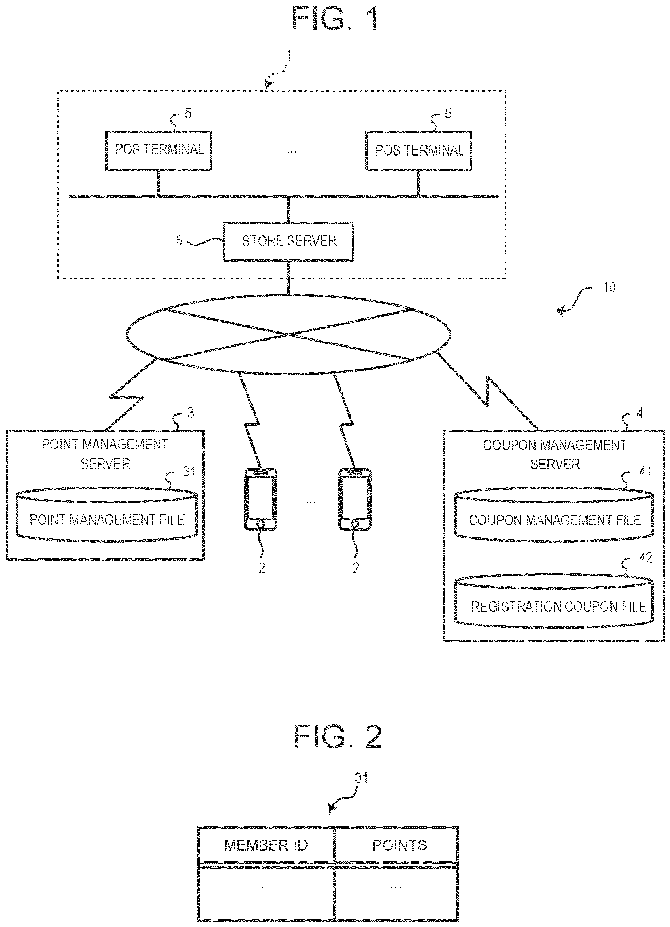

FIG. 1 is a schematic diagram of a coupon system 10 according to an embodiment. The coupon system 10 includes a store system 1, one or more user terminals 2, a point management server 3, and a coupon management server 4. The store system 1, the user terminal 2, the point management server 3, and the coupon management server 4 are communicably connected to each other via a network such as the Internet. The store system 1, the point management server 3, and the coupon management server 4 may be managed by the same operator or may be managed by different operators. The numbers of the store system 1, the user terminal 2, the point management server 3, and the coupon management server 4 are not limited to the illustrated example.

The user terminal 2 is a terminal device such as a smartphone owned by a registered customer who is a user of the coupon system 10. An application program for a registered customer (hereinafter, also referred to as a "customer application") is installed in the user terminal 2. The user terminal 2 displays a bar code indicating the member ID assigned for the customer through the customer application. The user terminal 2 receives and stores a coupon distributed by the coupon management server 4. The user terminal 2 displays the stored coupon information of the coupon in a selectable manner through the customer application. The customer may select a coupon from the displayed coupon information to use it in a transaction.

Here, the coupon information is information used in a process for giving a reward to a customer by a store, for example, a discount processing. Specifically, the coupon information is information such as a coupon ID for specifying the type of coupon and information indicating the content of the coupon.

The rewards given to the customers through coupons include discounts that deduct a certain amount from their sales prices, discounts that deduct a certain percentage of their sales prices (hereinafter collectively referred to as "discount"), and receipts of goods for free. In the present embodiment, it is assumed that the reward by the coupon to the customer is a discount.

The point management server 3 manages points earned by registered customers. In the present embodiment, the point has a value corresponding to money that can be used in the next and subsequent shopping. Points are granted to a customer according to the customer's purchase amount in the transaction. The points may be used for a portion of the transaction amount or may be used for exchange with an item. The points may be those that can be exchanged for an item or a reward only when the predetermined number of points is reached. FIG. 2 is a data configuration diagram of a point management file 31 stored in the point management server 3. The point management file 31 stores a member ID and points in association with each other. The member ID identifies a customer. The points indicates the points earned by the customer.

The point management server 3 receives information indicating points earned in a transaction from POS terminal 5 via the store server 6, and manages the points for each store customer. Specifically, the point management server 3 receives the member ID indicating the customer of the settled transaction and the points given to the customer in the transaction from the POS terminal 5, and updates the point management file 31. More specifically, the point management server 3 adds the points received from the POS terminal 5 to the points corresponding to the member ID received from the POS terminal 5 in the point management file 31.

Further, the point management server 3 receives the member ID indicating the customer of a settled transaction and information indicating the points used by the customer in the transaction from the POS terminal 5, and updates the point management file 31. More specifically, the point management server 3 subtracts the points received from the POS terminal 5 from the points corresponding to the member ID received from the POS terminal 5 in the point management file 31.

The point management file 31 may be updated every time a payment is made by the POS terminal 5, or may be updated periodically, such as once a day. For example, the point management server 3 receives, from the store server 6, information on the points of the transaction settled at the rate of one transaction per day by the batch process of the store server 6 that manages the transaction data of the respective POS terminals 5. Then, the point management server 3 can update the point management file 31 based on the information received from the store server 6.

The point management server 3 may manage points of customers of one store or may manage points of customers of a plurality of stores. When the points of the customers of one store is managed, the function of the point management server 3 may be provided to the store server 6. When the points of the customers of the plurality of stores are managed, it is desirable that the point management file 31 further stores a store ID for specifying each store in association with the member ID. The plurality of stores may be a plurality of stores operated by the same company or may be a plurality of stores operated by different companies.

The coupon management server 4 has a function of electrically distributing coupons to the user terminal 2. Specifically, the coupon management server 4 receives a coupon plan from the store and distributes the coupon corresponding to the coupon plan to the user terminal 2. For example, the coupon management server 4 receives coupon information and distribution conditions as a coupon plan, and distributes the coupon information to the user terminal 2 of the customer that matches the distribution conditions. In the following description, delivering a coupon to the user terminal 2 may be referred to as "issuing a coupon".

The coupon management server 4 manages coupon information of the coupon issued to the customer. In addition, the coupon management server 4 manages coupon information of a coupon used by the customer in the next one transaction in response to a pre-registration request from the user terminal 2. The coupon management server 4 stores a coupon management file 41 and a registered coupon file 42.

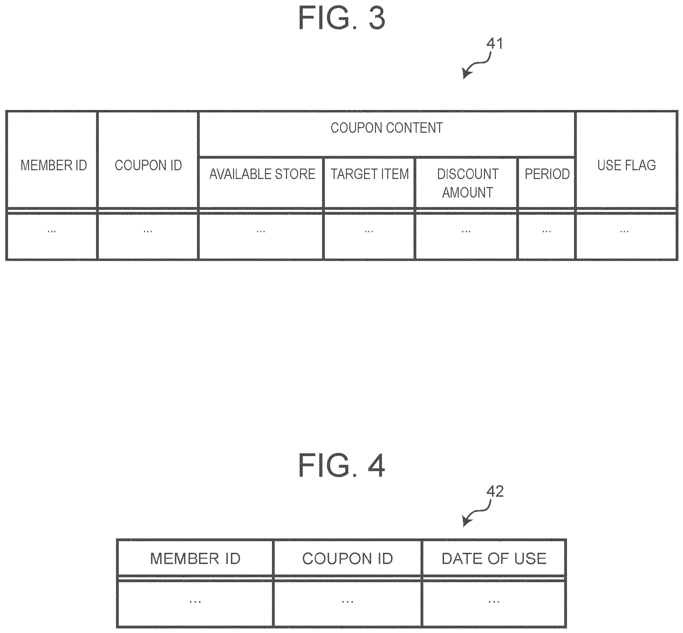

The coupon management file 41 manages coupon information of a coupon held by each customer. FIG. 3 is a data configuration diagram of the coupon management file 41 stored the coupon management server 4. The coupon management file 41 stores a coupon ID, a coupon content, and a use flag in association with the member ID.

As described above, the member ID is customer identification information for identifying the customer. The coupon ID is information for specifying a coupon. The coupon content includes an available store, a target item, a discount amount, a period, and the like. The available store is information indicating a store in which a coupon can be used, and is, for example, a store code for specifying the store. The target item is information for specifying the target item of the coupon, and is, for example, an item code of the target item. The discount amount is information indicating an amount of money to be discounted by use of the coupon. The period is information indicating a period during which the coupon can be used.

The use flag is information indicating whether a coupon has been used. In the use flag, "Not used" is registered when a coupon is issued, and when the coupon management server 4 receives information indicating that a coupon has been used from the POS terminal 5, it is rewritten to "Used". The coupon whose use flag is rewritten to "Used" is managed so that it cannot be used.

In the present embodiment, the coupon management file 41 stores only the coupon information of the coupon distributed by the coupon management server 4 to the user terminal 2, but the present invention is not limited thereto. The coupon management file 41 may also store information on a paper coupon issued to a customer. For example, the coupon management server 4 may acquire the coupon information of the paper coupon printed on the receipt at the time of the checkout at the store and the member ID of the customer who has paid the purchase price in the checkout, that is, the customer who has conducted the transaction, from the POS terminal 5 that has performed the checkout process, and register them in the coupon management file 41.

The registered coupon file 42 is a file that manages coupon information of a coupon to be used by a customer in the next one transaction in response to a coupon pre-registration request from the user terminal 2. The registered coupon file 42 stores information included in the coupon pre-registration request. FIG. 4 depicts the data configuration of the registered coupon file 42 stored in the coupon management server 4. The registered coupon file 42 stores the coupon ID and the date of use in association with the member ID.

As described above, the member ID is customer identification information for identifying the customer, and the coupon ID is information for identifying the coupon. The date of use indicates a scheduled date the coupon is to be used.

The coupon pre-registration request transmitted by the user terminal 2 is a request to select a coupon to be used in one transaction and pre-register the coupon in the registered coupon file 42 before the customer pays for one transaction. For example, the customer activates the customer application to select a coupon to be used at the time of checkout, for example, when the customer selects an item to be purchased at a sales floor or waits at a checkout counter. The customer may select multiple coupons. The user terminal 2 transmits the coupon pre-registration request including the coupon IDs for all the selected coupons, the member ID of the customer and the date the coupon is to be used, to the coupon management server 4. The coupon pre-registration request may be transmitted prior to the use date of the coupon. As described above, the coupon management server 4 manages the information included in the coupon pre-registration request.

When receiving a registered coupon query including a member ID from the POS terminal 5, the coupon management server 4 reads out the coupon ID and the use date corresponding to the member ID from the registered coupon file 42. Then, the coupon management server 4 refers to the coupon management file 41 to check whether the coupon ID has not been used. When the coupon has not been used, the coupon management server 4 reads out the coupon contents from the coupon management file 41. The coupon management server 4 transmits the read coupon ID, the use date, and coupon content as registered coupon information to the POS terminal 5. The coupon ID registration in the registered coupon file 42 and the coupon content associated with the coupon ID in the coupon management file 41 are exemplary registered coupon information indicating a pre-registered coupon.

The coupon management server 4 may have only a function of managing coupon information without distributing coupons. The coupon management server 4 may manage coupon information of a customer of one store or may manage coupon information of customers of a plurality of stores. When the coupon information of the customer of one store is managed, the function of the coupon management server 4 may be provided to the store server 6. The plurality of stores may be operated by the same company or different companies.

Next, the store system 1 will be described. The store system 1 is used at, for example, a mass retailer such as a supermarket. The store system 1 includes one or more POS terminals 5 and a store server 6. The POS terminals 5 and the store server 6 are communicably connected to each other via a Local Area Network (LAN) or the like.

The POS terminal 5 is operated by a salesclerk to perform item registration and checkout processing. The POS terminal 5 reads an item code of an item purchased by a customer by an operation of the operator (i.e., salesclerk) and stores item information acquired based on the read item code, thereby executing item registration. Further, the POS terminal 5 executes checkout processing based on the registered item information. The POS terminal 5 is also referred to as the checkout device.

The checkout processing is a process for the customer to pay the price of the purchased item, and includes a calculation process, a payment process, a receipt issuance process, and the like. The calculation process is, for example, a process of calculating a transaction amount. The payment process is for completing the payment of the transaction amount calculated in the calculation process, and includes, for example, calculation and payout of change in the cash payment, and communication with the payment server in the cashless payment. The payment process includes a process of giving points to the customer according to the payment amount. The receipt issuance process is for issuing a paper receipt or an electronic receipt.

Further, the POS terminal 5 executes reward processing. The reward processing is related to a coupon. The POS terminal 5 determines whether there is a coupon to be used by the customer in the transaction as a reward processing, and when there is a coupon to be used, deducts the discount amount set in the coupon from the price of the target item. In the following description, the process of subtracting the discount amount set in the coupon from the price of the target item is also referred to as "discount processing".

At the time of checkout, the POS terminal 5 reads the member ID of the customer from the bar code displayed on the user terminal 2. The POS terminal 5 inquires of the coupon management server 4 whether there is a coupon previously registered by the customers of the read member ID, and acquires the registered coupon information as a response. The POS terminal 5 checks whether the item registered as the transaction target is the coupon target item of the acquired registered coupon information. The POS terminal 5 performs a discount processing on the coupon target item of the acquired registered coupon information among the items registered in the item registration.

Thus, even when a customer uses a plurality of coupons in one transaction, the POS terminal 5 can perform a discount processing related to the plurality of coupons only by reading the member ID. Since the POS terminal 5 does not need to read different coupon IDs multiple times, it is possible not only to shorten the time required for checkout of one transaction but also to improve the operability of the operator.

The store server 6 receives and manages transaction data settled in the checkout process from the respective POS terminals 5. The store server 6 centrally manages transaction data received from the respective POS terminals 5, and performs sales management in one store. Further, the store server 6 appropriately updates the item master file in which the item information of the items handled in the store is stored, and transmits a copy of the item master file to the respective POS terminals 5. The store server 6 transmits various types of information received from POS terminal 5 to the point management server 3 and the coupon management server 4 as needed. Further, the store server 6 transmits various types of information received from the point management server 3 and the coupon management server 4 to POS terminal 5 as needed.

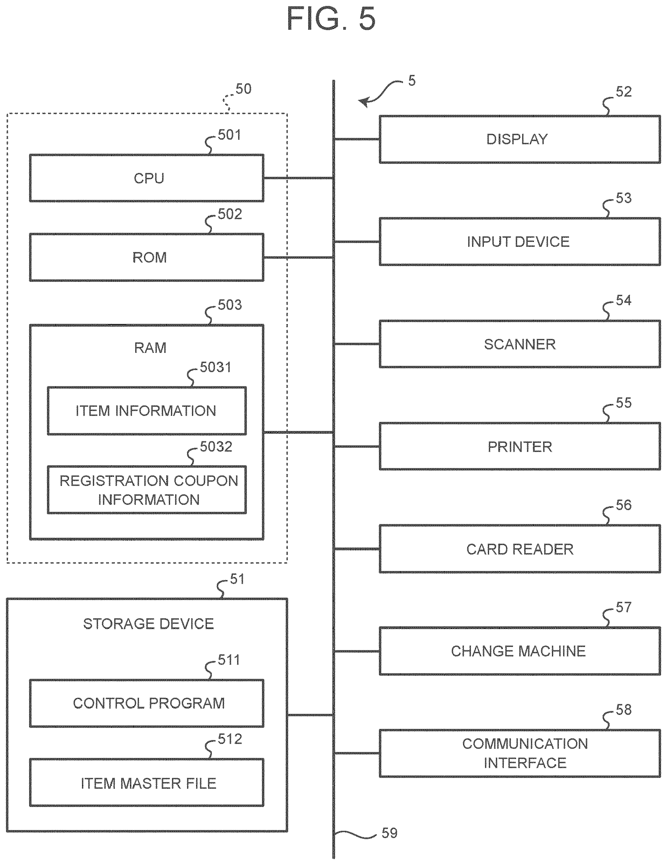

Next, the POS terminal 5 will be described. FIG. 5 is a diagram illustrating a main hardware configuration of the POS terminal 5. The POS terminal 5 includes a controller 50, a storage device 51, a display 52, an input device 53, a scanner 54, a printer 55, a card reader 56, a change machine 57, and a communication interface 58. The controller 50, the storage device 51, the display 52, the input device 53, the scanner 54, the printer 55, the card reader 56, the change machine 57, and the communication interface 58 are connected to each other via a bus 59 or the like.

The controller 50 includes a processor such as a Central Processing Unit (CPU) 501, a Read Only Memory (ROM) 502, and a Random Access Memory (RAM) 503. The CPU 501, the ROM 502 and the RAM 503 are connected to each other via the bus 59.

The CPU 501 controls the entire operation of the POS terminal 5. The ROM 502 stores various programs such as programs executed by the CPU 501 and various types of data. The RAM 503 is used as a work area for the CPU 501 and stores various programs and various data loaded from the ROM 502 and the storage device 51. The controller 50 executes various control processes of POS terminal 5 by operating the CPU 501 in accordance with a control program stored in the ROM 502 or the storage device 51 and expanded in the RAM 503.

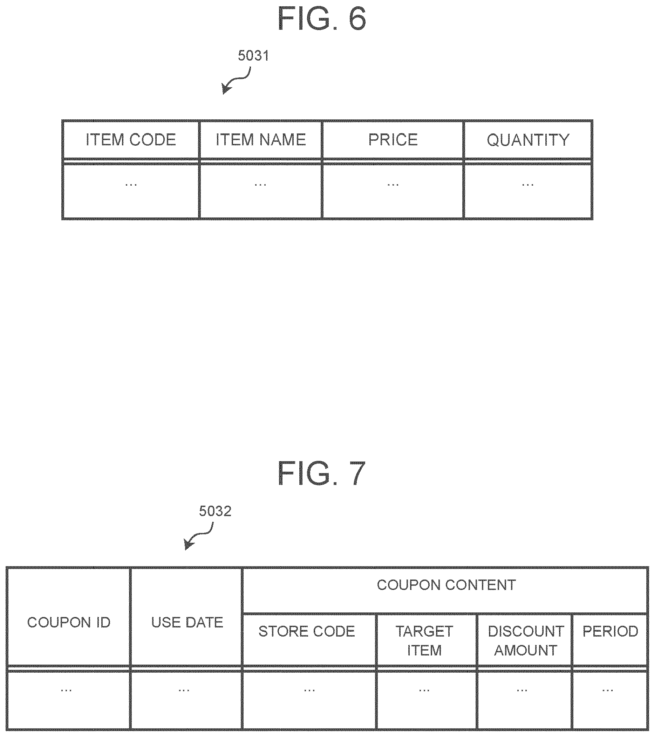

The RAM 503 includes an item information area 5031 and a registered coupon information area 5032. The item information area 5031 stores item information of an item purchased by the customer. FIG. 6 is a diagram illustrating a data configuration of the item information area 5031. The item information area 5031 stores the name, unit price, and quantity of the purchased item in association with the item code.

The item code is information for identifying an item, and is also referred to as the item identification information. The unit price of the item may be a tax-inclusive price or a tax-exclusive price.

The item name and the price are read from the storage device 51 based on the item code read from the item bar code attached to the item by the scanner 54, for example. The quantity is input from, for example, the input device 53. Storage or registration of item information in the item information area 5031 is also referred to as "item registration".

The registered coupon information area 5032 stores the registered coupon information received from the coupon management server 4. The POS terminal 5 transmits an inquiry of the registered coupon information corresponding to the read member ID of the customer to the coupon management server 4, receives the registered coupon information as a response, and stores the received registered coupon information in the registered coupon information area 5032. The registered coupon information in the registered coupon information area 5032 is one or a plurality of coupons that the customer is scheduled to use in one transaction. FIG. 7 is a data configuration diagram of the registered coupon information area 5032. The registered coupon information area 5032 stores the use date and the content of the coupon in association with the coupon ID.

As described above, the coupon ID is information for specifying the coupon, and the use date is information indicating a scheduled date the coupon is to be used. Further, the coupon content is the same as that of the coupon management file 41, and therefore, a duplicate description thereof will be omitted.

The storage device 51 is a storage medium such as a Hard Disk Drive (HDD) or a flash memory, and maintains the stored data even if the power supply is cut off. The storage device 51 stores a control program 511 and an item master file 512.

The control program 511 performs item registration based on the item code read by the scanner 54, a process for acquiring the registered coupon information from the coupon management server 4 based on the read member ID, a process for performing checkout processing of one transaction based on the information stored in the item information area 5031 and the acquired registered coupon information, and the like.

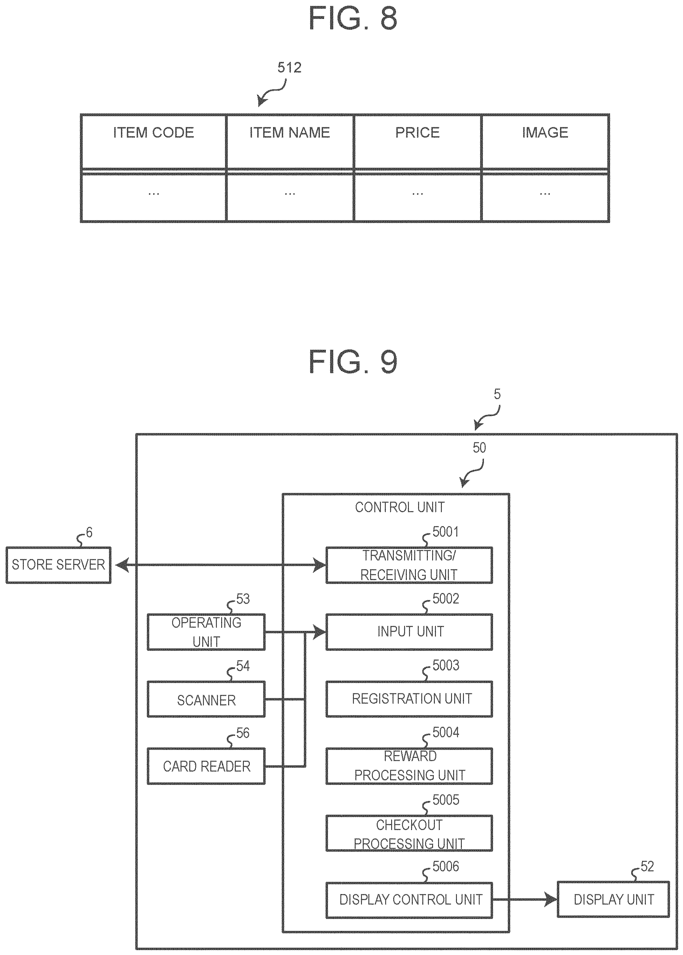

The item master file 512 stores item information of an item sold by a store, and is transmitted from the store server 6 and stored in the storage device 51. Since the items displayed and sold in the store change daily, the item master file 512 is appropriately updated. FIG. 8 is a diagram illustrating a data configuration of the item master file 512. The item master file 512 stores the name, price, and image of each item in association with its item code.

As described above, the item code is information identifying the item. The image is image data such as a photograph or an illustration showing the appearance of the item.

Referring back to FIG. 5, the hardware configuration of the POS terminal 5 will be described.

The display 52 is a display device and includes a liquid crystal display or the like. The display 52 displays various types of information under the control of the controller 50. For example, the display 52 displays the item information of the item registered as the item, the transaction amount (i.e., the total amount of one transaction), and the like. Further, the display 52 displays various operation screens for the operator to perform an operation.

The input device 53 includes a touch panel provided on the surface of the display 52, a keyboard provided separately from the display 52, and the like. The input device 53 inputs various kinds of information input by the operation of the operator to the controller 50. For example, the input device 53 inputs a transaction start input instructing the start of the checkout processing, a checkout instruction input instructing the checkout processing, and the like to the controller 50.

The scanner 54 reads information from various code symbols shown on a medium. For example, the scanner 54 reads an item code from the item bar code attached to an item. The scanner 54 reads the item code from the item bar code attached to the item purchased by the customer by the operation of the operator. In addition, the scanner 54 reads a member ID from a bar code displayed on the user terminal 2 of the customer. The scanners 54 may be fixedly provided in the POS terminal 5, or may be a handheld type that can be handled by an operator.

The printer 55 prints and issues a receipt related to one transaction under the control of the controller 50. The printer 55 prints transaction information including a transaction amount, a discount amount, item information of a purchased item, given points, and the like, and various messages on a receipt. The printer 55 may print and issue a paper coupon on which coupon information is printed at the time of receipt issuance. The paper coupon may be issued as part of the receipt or may be issued separately from the receipt.

The card reader 56 reads information from various cards. For example, the card reader 56 reads customer information required for credit card payment from a customer's credit card. The card reader 56 may read a member ID from a member card owned by the customer. The card reader 56 may be a magnetic card reader that reads information from a magnetic card or an IC card reader that reads information from a card with a built-in IC tip.

When the customer pays the purchase price in cash, the change machine 57 accepts bills and coins paid by the customer and pays out change as necessary.

The communication interface 58 is a network interface circuit for communicating with an external device such as the store server 6. The controller 50 is connected to an external device via the communication interface 58, so that information or data can be transmitted and received to and from the external device. For example, the controller 50 can transmit and receive information to and from the point management server 3 and the coupon management server 4 via the communication interface 58 and the store server 6.

Next, the main functional configuration of the controller 50 of the POS terminal 5 will be described. FIG. 9 is a diagram illustrating the main functional configuration of the controller 50 of the POS terminal 5. The controller 50 functions as a transmitting/receiving unit 5001, an input unit 5002, a registration unit 5003, a reward processing unit 5004, a checkout processing unit 5005, and a display control unit 5006 when the CPU 501 operates in accordance with a control program stored in the ROM 502 or the storage device 51. Note that each of these functions may be performed by hardware such as a dedicated circuit.

The transmitting/receiving unit 5001 controls the communication interface 58 to transmit and receive various kinds of information to and from the store server 6. For example, the transmitting/receiving unit 5001 controls the communication interface 58 to receive a copy of the item master file 512 from the store server 6. In addition, the transmitting/receiving unit 5001 controls the communication interface 58 to transmit the transactional data for each transactional to the store server 6.

The transmitting/receiving unit 5001 controls the communication interface 58 to transmit and receive various kinds of information to and from the point management server 3 and the coupon management server 4 via the store server 6. For example, the transmitting/receiving unit 5001 controls the communication interface 58 to transmit a coupon query including the member ID input to the input unit 5002 to the coupon management server 4. Then, the transmitting/receiving unit 5001 controls the communication interface to receive, from the coupon management server 4, the registered coupon information registered in advance by the member identified by the transmitted member ID. he transmitting/receiving unit 5001 functions as a coupon information acquisition unit that acquires registered coupon information.

When the coupon related to the acquired registered coupon information is not used in the transaction, the transmitting/receiving unit 5001 controls the communication interface to transmit an unused coupon notification to the coupon management server 4. The unused coupon notification notifies the coupon not used in the transaction among the registered coupon information registered in advance. The coupon management server 4 manages the coupon indicated by the coupon information included in the unused coupon notification as an unused coupon. The transmitting/receiving unit 5001 functions as an output unit that outputs the registered coupon information to the coupon management server 4 when the item registered is not the target item of the registered coupon information.

At this time, the transmitting/receiving unit 5001 controls the communication interface to output the registered coupon information to the coupon management server 4 on condition that an unused confirmation input indicating that the coupon related to the registered coupon information is not to be used is entered. The operator enters the unused confirmation input to the input device 53 after the operator confirms with the customer that the registered coupon information is not used when the target item of the registered coupon information is not included in the item registration. It can be said that the unused confirmation input declares that the coupon target item is not additionally purchased when the target item of the registered coupon information is not included in the item registration.

The transmitting/receiving unit 5001 controls the communication interface to transmit point information indicating points given to the customer in the transaction or points used by the customer in the transaction to the point management server 3. Then, the transmitting/receiving unit 5001 controls the communication interface to receive the point update notification indicating the updated points from the point management server 3.

Various types of information are entered to the input unit 5002 from the input device 53. For example, a transaction start input instructing the start of a transaction, a checkout instruction input instructing checkout processing, and the like are entered to the input unit 5002 from the input device 53. Further, the above-described unused confirmation input is entered to the input unit 5002 from the input device 53.

The item code is input to the input unit 5002 at the time of checkout. The item code to be input is, for example, an item code read from the item bar code by the scanner 54 or an item code input by the input device 53. The item code is a part of the item information. The input unit 5002 functions as an item information acquisition unit that acquires item information of an item purchased by a customer.

In the input unit 5002, customer identification information for identifying a customer, that is, a member ID is input. Specifically, the member ID read from the bar code displayed on the user terminal 2 of the customer by the scanner 54 is input to the input unit 5002. The input unit 5002 does not accept the input of the member ID after the payment process, which is a part of the checkout processing, is started. The start of the payment process refers to a time point at which information for the customer to make a payment is input, and specifically refers to a time point at which cash is input in the case of cash payment, a time point at which communication with the payment server is started in the case of credit card payment, and the like.

The member ID read from the member card of the customer by the card reader 56 may be input to the input unit 5002. In addition, in a case where the customer makes the payment by the credit card payment, the customer information read from the credit card of the customer by the card reader 56 is input to the input unit 5002.

The registration unit 5003 executes item registration. Specifically, the registration unit 5003 reads information corresponding to the item code input to the input unit 5002 from the item master file 512, and registers or stores the item information including the item code in the item information area 5031. Further, the registration unit 5003 registers the registered coupon information received from the coupon management server 4 by the transmitting/receiving unit 5001 in the registered coupon information area 5032.

The reward processing unit 5004 executes discount processing as reward processing related to the coupon. The reward processing unit 5004 executes discount processing for the item registered by the registration unit 5003 on condition that the item is the target item of the registered coupon information acquired by the transmitting/receiving unit 5001. Specifically, the reward processing unit 5004 executes the discount processing on the target item of the registered coupon registered in the registered coupon information area 5032 among the items registered in the item registration. More specifically, the reward processing unit 5004 reads the price of the coupon target item from the item master file 512 and also reads the discount amount from the registered coupon information area 5032. Then, the reward processing unit 5004 performs the discount processing by subtracting the discount amount from the read price.

The checkout processing unit 5005 executes checkout processing related to a transaction. For example, the checkout processing unit 5005 executes checkout processing based on the item information input to the input unit 5002 and the registered coupon information received by the transmitting/receiving unit 5001. Specifically, the checkout processing unit 5005 calculates a transaction amount of one transaction, points to be given to a customer, and the like based on the information stored in the item information area 5031 and the result of the discount processing in accordance with the registered coupon information.

Then, the checkout processing unit 5005 executes a payment process for completing the payment of the calculated transaction amount. When cash payment is selected by the operator, the checkout processing unit 5005 calculates change by subtracting the transaction amount from the amount of money input to the change machine 57, and causes the change machine 57 to pay out the calculated change. In addition, in a case where payment by cashless payment such as payment by a credit card is selected by the operator, the checkout processing unit 5005 communicates with a payment server (not shown) via the transmission and reception unit 5001 to complete the payment. When the payment processing is completed, the checkout processing unit 5005 causes the printer 55 to print a receipt.

The display control unit 5006 controls the display 52 to display various kinds of information on the display 52. For example, the display control unit 5006 causes the display 52 to display the item information, the transaction amount, various operation screens, and the like of the item registered in the item. Further, the display 52 causes the display 52 to display a confirmation screen for the operator to perform unused confirmation input. The confirmation screen is an operation screen for selecting whether to additionally purchase the coupon target item when the target item of the registered coupon information is not included in the item registration, that is, whether to use the coupon indicated by the registered coupon information.

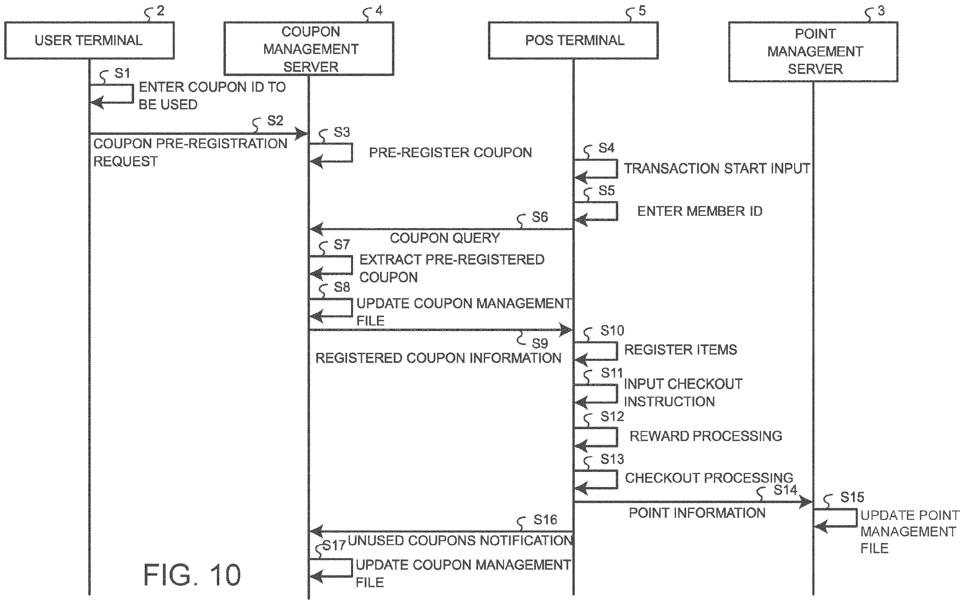

Next, an outline of the operation of the coupon system 10 having the above-described configuration will be described. FIG. 10 is a sequence chart illustrating a flow of operations of the coupon system 10 in a transaction using a coupon registered in advance by a customer.

The customer selects one or more coupons to be registered in advance by the user terminal 2. The coupon IDs of the selected coupons are inputted to the user terminal 2 (step S1). The user terminal 2 transmits a coupon pre-registration request in which the member ID of the customer and the input coupon ID are associated with each other to the coupon management server 4 (step S2).

The coupon management server 4 checks whether the member ID and the coupon ID included in the coupon pre-registration request are associated with each other in the coupon management file 41, and performs coupon pre-registration if they are associated with each other (step S3). Specifically, the coupon management server 4 registers, in the registered coupon file 42, the member ID, the coupon ID, and the use date included in the coupon pre-registration request.

At this time, the coupon management server 4 registers the available coupon, that is, the coupon information in which "Not used" is registered in the use flag in the coupon management file 41 in the registered coupon file 42. This completes the pre-registration of the coupon used by the customer in one transaction. When the member ID and the coupon ID included in the coupon pre-registration request are not associated with each other in the coupon management file 41, the coupon management server 4 transmits error information to the user terminal 2.

When the item to be purchased by the customers is brought to the checkout counter for checkout, the POS terminal 5 receives a transaction start input by the operator (step S4). Next, the member ID read by the scanner 54 is entered to the POS terminal 5 from the bar code displayed on the user terminal 2 (step S5). The member ID can be entered anytime between the transaction start input and the start of the payment processing in the checkout processing. The POS terminal 5 transmits a coupon query including the entered member ID to the coupon management server 4 (step S6).

The coupon management server 4 extracts a pre-registered coupon (step S7). Specifically, the coupon management server 4 extracts the coupon ID corresponding to the member ID included in the received coupon query from the registered coupon file 42. The coupon management server 4 updates the coupon management file 41 (step S8). Specifically, the coupon management server 4 rewrites the use flag corresponding to the extracted coupon ID to "Used".

The coupon management server 4 transmits registered coupon information to the POS terminal 5, which is the sender of the coupon query (step S9). More specifically, the coupon management server 4 reads the coupon content corresponding to the coupon ID extracted from the registered coupon file 42 from the coupon management file 41. Then, the registered coupon information including the coupon ID, the use date, and the coupon content is transmitted to the POS terminal 5. The POS terminal 5 stores the received registered coupon information.

The POS terminal 5 registers items to be purchased by the customer (step S10). When the item registration of all the items purchased by the customers are completed, the POS terminal 5 receives a checkout instruction (step S11). The POS terminal 5 executes discount processing as reward processing on the target item of the registered coupon information among the items registered as the item registration (step S12). Subsequently, the POS terminal 5 executes checkout processing on the basis of the registered item information and the outcome of the discount processing (step S13).

The POS terminal 5 transmits point information in which the points calculated in the checkout processing are associated with the member ID of the customers to the point management server 3 (step S14). The point management server 3 updates the point management file 31 based on the received point data (step S15).

If any of the pre-registered coupons are not used in the transaction, the POS terminal 5 transmits an unused coupon notification in which the coupon ID of the unused coupon and the member ID are associated with each other to the coupon management server 4 (step S16).

The coupon management server 4 updates the coupon management file 41 based on the received unused coupon notification. Specifically, in the coupon management file 41, the coupon management server 4 rewrites the use flag of the coupon information specified by the member ID and the coupon ID included in the unused coupon notification to "Not used". This allows the customer to later use the unused coupon.

According to the above-described operation, the customer can register a coupon to be used in one transaction in advance, and can obtain the reward by the coupon only by indicating the member ID at the time of the checkout.

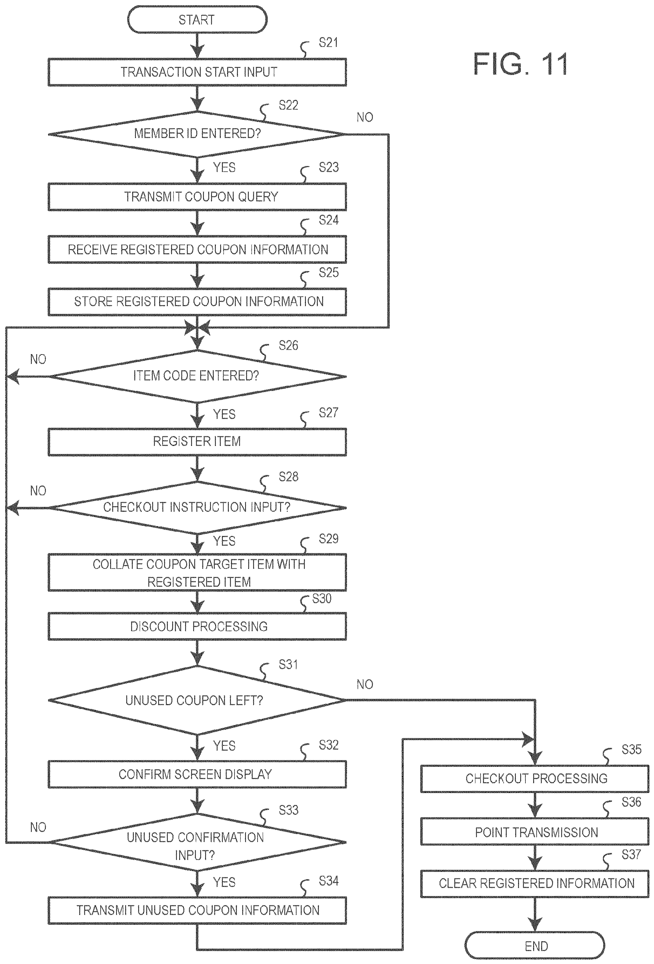

Next, the checkout processing executed by the POS terminal 5 will be described. FIG. 11 is a flowchart of the checkout processing performed by the controller 50 of the POS terminal 5.

First, a transaction start input is made to the input unit 5002 (step S21). Next, the controller 50 determines whether a member ID is entered to the input unit 5002 (step S22). In other words, the controller 50 determines whether the customer has been registered to the system. When the member ID is entered (YES in step S22), the transmitting/receiving unit 5001 controls the communication interface 58 to transmit a coupon query to the coupon management server 4 (step S23).

Next, the transmitting/receiving unit 5001 controls the communication interface 58 to receive the registered coupon information from the coupon management server 4 as a response to the coupon query (step S24). When the customer of the member ID entered to the input unit 5002 has not been registered, the communication interface 58 receives information indicating that there is no pre-registration as a reply to the coupon query. The registration unit 5003 stores the registered coupon information received by the transmission and reception unit 5001 in the registered coupon information area 5032 (step S25).

Next, the controller 50 determines whether the item code has been entered to the input unit 5002 (step S26), and if not (No in step S26), returns to the process of step S26 and waits. When the item code is entered to the input unit 5002 (YES in step S26), the registration unit 5003 executes item registration (step S27). Specifically, the registration unit 5003 reads the item information corresponding to the item code input to the input unit 5002 from the item master file 512, and stores the item information in the item information area 5031.

Subsequently, the controller 50 determines whether a checkout instruction input has been made to the input unit 5002 (step S28), and if not (NO in step S28), returns to the process of step S26. Then, the controller 50 waits until the next item code is input. When the checkout instruction is input to the input unit 5002 (YES in step S28), the reward processing unit 5004 collates the item registered with the target item of the registered coupon information (step S29). The reward processing unit 5004 executes discount processing on the target item of the registered coupon information among the items registered as a result of the collation (step S30).

The controller 50 determines whether there is registered coupon information in which the coupon target item is not included in the item registration, that is, whether there is an unused coupon among the coupons related to the registered coupon information received by the transmitting/receiving unit 5001 (step S31), as a result of the verification by the reward processing unit 5004. When there is an unused coupon (YES in step S31), the display control unit 5006 causes the display 52 to display a confirmation screen for the operator to perform the unused confirmation input (step S32).

The controller 50 determines whether an unused confirmation input has been entered (step S33). In other words, the controller 50 determines whether information indicating that the target item of the unused coupon is not to be additionally purchased is input on the confirmation screen. When the information indicating the use of the coupon is input (NO in step S33), the controller 50 returns to the process of step S26 and waits for the input of the item code.

When the unused confirmation input is entered (YES in step S33), the transmitting/receiving unit 5001 controls the communication interface 58 to transmit the coupon information of the unused coupon to the coupon management server 4 (step S34). Next, the checkout processing unit 5005 executes checkout processing (step S35). The transmitting/receiving unit 5001 controls the communication interface 58 to transmit, to the point management server 3, point information in which the points calculated in the checkout process are associated with the member ID input to the input unit 5002 (step S36).

Next, the registration unit 5003 clears the information stored in the item information area 5031 and the registered coupon information area 5032 (step S37). Then, the controller 50 ends the checkout processing.

In the process of step S22, when the member ID is not entered to the input unit 5002 (NO in step S22), the controller 50 skips the process of step S23 to step S25, and proceeds to the process of step S26. When it is determined that the customer has not been registered to the system, since the pre-registration of the coupon is not performed, the controller 50 skips the process related to the query of the registered coupon information.

When there is no unused coupon in the process of step S31 (NO in step S31), the controller 50 skips the process of step S32 to step S34, and proceeds to the process of step S35. When the customer uses all of the pre-registered coupons in one transaction, the controller 50 skips the processing related to the transmission of the unused coupons to the coupon management server 4.

With the above-described checkout processing, the POS terminal 5 can efficiently perform a checkout when a customer uses a coupon. When a pre-registered coupon is not used, the POS terminal 5 provides the coupon management server 4 with the unused coupon. As a result, the coupon management server 4 can manage the unused coupon as a usable coupon among the coupons registered in advance for use in the transaction.

As described above, the POS terminal 5 of the present embodiment includes the input unit 5002 to which the member ID for identifying a customer is input, the transmitting/receiving unit 5001 for acquiring the registered coupon information indicating the coupon registered in advance by the customer identified by the member ID input to the input unit 5002, the input unit 5002 for acquiring the item information of the item purchased by the customer, and the checkout processing unit 5005 for executing the checkout processing based on the item information acquired by the input unit 5002 and the registered coupon information acquired by the transmission and reception unit 5001.

Accordingly, the POS terminal 5 can acquire coupon information of a plurality of coupons used by a customer based on the input member ID. Therefore, even when a customer uses a plurality of coupons in one transaction, the POS terminal 5 can perform discount processing related to the plurality of coupons only by reading the member ID. As a consequence, the POS terminal 5 can reduce the amount of time required to pay for one transaction, and can improve the operability of the operator.

Further, in the POS terminal 5 of the present embodiment, the registered coupon information corresponding to the member ID customer-identification information input to the input unit 5002 is received from the coupon management server 4 that stores the member ID and the registered coupon information in association with each other.

As a result, the POS terminal 5 can acquire the registered coupon information from the coupon management server 4 which has been transmitting and receiving data in the past in order to manage the coupon, and does not need to increase the number of communication targets. Therefore, the system configuration for the POS terminal 5 to acquire the registration coupon information can be simplified.

Further, the POS terminal 5 of the present embodiment further includes a reward processing unit 5004 that executes the reward processing based on the registered coupon information on condition that the item related to the item code input to the input unit 5002 is the target item of the registered coupon information received by the transmission and reception unit 5001, and the checkout processing unit 5005 executes the checkout processing based on the reward processing performed by the reward processing unit 5004.

As a result, the POS terminal 5 can reliably execute the reward processing on the pre-registered coupon. Therefore, the POS terminal 5 can accurately perform a checkout for transactions using coupons.

In addition, the POS terminal 5 of the present embodiment further includes the transmitting/receiving unit 5001 that outputs the registered coupon information to the coupon management server 4 when the item related to the item code input to the input unit 5002 is not the target item of the registered coupon information received by the transmitting/receiving unit 5001.

As a result, the POS terminal 5 can notify the coupon management server 4 of the coupon not used in the transaction among the pre-registered coupons. Therefore, the coupon management server 4 can manage the coupon registered in advance but not used in the transaction as an unused coupon.

Further, in the POS terminal 5 of the embodiment, the transmitting/receiving unit 5001 outputs the registered coupon information on condition that an unused confirmation input indicating that the coupon related to the registered coupon information received by the transmitting/receiving unit 5001 is not used is input.

Accordingly, the POS terminal 5 does not output the registered coupon information to the coupon management server 4 when it is not possible to confirm that the customer does not use the pre-registered coupon. Therefore, when the customer additionally purchases the target item of the registered coupon information, the POS terminal 5 does not cancel the registered coupon information transmitted to the coupon management server 4.

Further, in the POS terminal 5 of the present embodiment, the input unit 5002 does not accept the input of the member ID after the payment processing by the checkout processing unit 5005 is started.

As a result, the POS terminal 5 can prevent the use of the coupon after the payment process is started. Therefore, the POS terminal 5 can prevent the payment process from being redone.

In the above-described embodiments, the control program executed by the POS terminal 5 may be copied and installed from a non-transitory computer readable recording medium such as a CD-ROM. Further, the control program executed by the POS terminal 5 may be stored in a computer connected to a network such as the Internet, and may be downloaded and installed via the network.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the framework of the disclosure. The accompanying claims and their equivalents are intended to cover such forms or modifications as would fall within the scope of the disclosure.

## Claims

1. A point of sale (POS) system comprising:
a first server (4) that stores coupon information indicating a plurality of coupons selected by a customer for future use in association with an ID of the customer; and
a POS terminal (5) installed in a store and including:
a communication interface (58),
an input device (53), and
a controller (50) configured to:
in response to the ID of the customer input through the input device, control the communication interface to transmit a request for the plurality of coupons associated with the ID to the first server,
perform registration processing on purchased by the customer, and
perform checkout processing on the registered items using the plurality of coupons.

2. The POS system according to claim 1, wherein the controller is configured to:
determine whether the plurality of coupons are applicable to the registered items, and
upon determining that the plurality of coupons are applicable to the registered items, perform reward processing corresponding to the plurality of coupons.

3. The POS system according to claim 2, wherein the reward processing is discount processing to apply a discount to an amount of purchase.

4. The POS system according to claim 2 or 3, wherein the controller is configured to:
generate unused coupon information indicating one or more unused coupons that have not been applied to the registered items, and
control the communication interface to transmit the unused coupon information to the first server.

5. The POS system according to any one of claims 1 to 4, wherein the controller is configured to not accept any ID through the input device after the checkout processing was started and until the checkout processing has been completed.

6. The POS system according to any one of claims 1 to 5, wherein the controller is configured to accept the ID through the input device after an instruction to start a transaction is input through the input device.

7. The POS system according to any one of claims 1 to 6, further comprising:
a second server that stores information indicating points earned by the customer, wherein
the controller is configured to:
generate point information indicating points earned by the customer by purchasing the registered items, and
control the communication interface to transmit the point information to the second server.

8. The POS system according to any one of claims 1 to 7, further comprising:
a mobile terminal by which the plurality of coupons can be selected and configured to transmit information indicating the selected coupons to the first server.

9. A method carried out by a point of sale (POS) system, the method comprising:
storing, in a memory, coupon information indicating a plurality of coupons selected by a customer for future use in association with an ID of the customer;
in response to the ID input to a POS terminal, acquiring the plurality of coupons associated with the ID;
performing registration processing on one or more items purchased by the customer; and
performing checkout processing on the registered items using the plurality of coupons.

10. The method according to claim 9, further comprising:
determining whether the plurality of coupons are applicable to the registered items; and
upon determining that the plurality of coupons are applicable to the registered items, performing reward processing corresponding to the plurality of coupons.

11. The method according to claim 10, wherein the reward processing is discount processing to apply a discount to an amount of purchase.

12. The method according to claim 10 or 11, further comprising:
generating unused coupon information indicating one or more unused coupons that have not been applied to the registered items; and
storing the unused coupon information in the memory.

13. The method according to any one of claims 9 to 12, wherein no ID is accepted by the POS terminal after the checkout processing was started and until the checkout processing has been completed.

14. The method according to any one of claims 9 to 13, wherein the ID is accepted by the POS terminal after an instruction to start a transaction is input through the POS terminal.

15. The method according to any one of claims 9 to 14, further comprising:
generating point information indicating points earned by the customer by purchasing the registered items; and
transmitting the point information to a server.
